# EUROPEAN PATENT SPECIFICATION

(11) **EP 0 428 982 B1**
(45) Date of publication and mention of the grant of the patent: **20.07.1994**
(21) Application number: 90121696.0
(22) Date of filing: 13.11.1990
(51) Int. Cl.: G21C 3/32

(54) **Fuel assembly for a boiling nuclear reactor**
Kernbrennstoffbündel für einen Siedewasserreaktor
Assemblage combustible pour réacteur nucléaire à eau bouillante

(30) Priority: 14.11.1989 SE 8903815
(43) Date of publication of application: 29.05.1991
(73) Proprietor: ABB ATOM AB, S-721 83 Västeras (SE)
(72) Inventor: Hembjer, Olof, S-724 60 Västeras (SE); Mansson, Ragnar, S-723 51 Västeras (SE); Nylund, Olov, S-720 17 (SE)
(74) Representative: Boecker, Joachim, Dr.-Ing.

(56) References cited:
- US-A- 4 749 543
- US-A- 4 749 544

## Description

The invention relates to a fuel assembly for a boiling nuclear reactor according to the precharacterising part of claim 1.

The spacers in the fuel assembly are placed with a certain distance between each other along the fuel rod bundle. A coolant, for example water, is adapted to flow from below upwards through the fuel assembly, which normally is arranged vertically, to cool, during nuclear reaction, the fuel rods arranged in the fuel assembly.

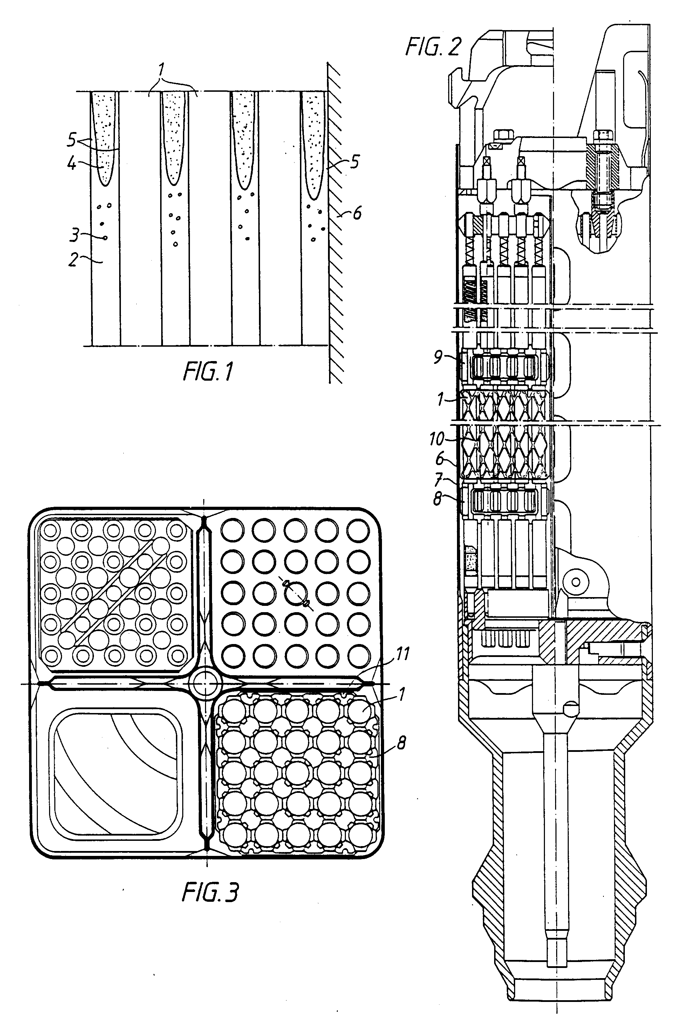

In a boiling type nuclear reactor the steam formation in the fuel assembly increases more and more towards the upper part of the fuel assembly. This is clear from Figure 1 which shows, in rough outline, part of a vertical cross section of a conventional fuel assembly. In Figure 1, numeral 1 designates fuel rods and numeral 2 the spaces between the rods. These spaces 2 are in the lower part of the fuel assembly, which correspond to the lower part of the reactor, filled with coolant, in the present case water. Further up in the fuel assembly, steam bubbles 3 are formed in the water which, still further up in the region 4, are transformed into water steam. As long as so-called dry out does not take place, however, there is always a film 5 of the cooling water on the fuel rods. It is important that this film 5 is maintained at all points of the rods 1. If at some point it disappears by dry out, serious damage at this point of the fuel rod 1 will rapidly occur.

The wall 6 of the fuel assembly is also normally coated with a water film 5. However, this film 5 is not entirely necessary since the wall 6 of the fuel assembly is considerably more insensitive to superheating than the fuel rods. This fact has been observed and attempts have been made to utilize it in some known designs, as, for example, in US-A-4,749,543, column 8 and figure 9. In these designs, the cooling water flowing along the wall 6 of the fuel assembly is diverted towards the centre of the bundle by means of elevations on the wall 6 or recesses in the same. Also fins on the downstream side of the spacers are used to achieve a diversion or deflection of the cooling water. All these embodiments have certain drawbacks. Thus, for example, the elevations increase the pressure drop in the cooling water and thus reduce the cooling effect whereas recesses in the wall entail certain difficulties from the point of view of manufacturing technique. Further, a deflection of the cooling water flowing along the fuel assembly wall 6 should take place as close as possible in relation to each separate spacer. If, however, the deflection means do not cover the entire distance between two adjoining spacers, then the deflection means should preferably be arranged as close as possible to the downstream (upper) spacer leaving uncovered the area immediately after the spacer viewed in the direction of flow. This is due to the fact that dry outs normally occur immediately upstream of a spacer or possibly in the same.

The invention aims at developing a fuel assembly for a boiling nuclear reactor of the above-mentioned kind which enables the described deflection of the coolant in a simple manner and without considerably increasing the flow resistance inside the fuel rod channel.

To achieve this aim the invention suggests a fuel assembly for a boiling nuclear reactor according to the introductory part of claim 1, which is characterized by the features of the characterizing part of claim 1.

Further developments of the invention are characterized by the features of the additional claims.

According to the invention there is arranged in the upper part of the fuel assembly, at least between a pair of spacers, a sleeve formed of sheet and arranged around the fuel rod bundle. The sleeve has an external shape which conforms closely to the walls of the fuel channel, and the sheet is perforated by a large number of openings to reduce the flow resistance generated by the sheet. The ratio of the sheet area covered by said openings and the sheet area covered by the remaining sheet material is at least 1:1.

By the above-mentioned sleeve improved cooling in the bundle is obtained in a relatively simple manner by scraping the film of coolant along the wall of the fuel assembly from the wall and diverting it towards the centre of the bundle. Since the sleeve is perforated by a large number of openings, the sleeve is at the same time prevented from causing a considerable increase in the pressure drop in the coolant flowing through the fuel assembly. Another advantage is that in connection with the assembly of the bundle it is simple to fit one or several sleeves onto the bundle. The sleeves are kept in position by the spacers.

To reduce the flow resistance of the sleeve still further, the sleeve sheet may be punched into a net-like structure. The meshes of this net-like structure are advantageously of rhombic shape with their longer diagonal being arranged in the longitudinal (vertical) direction of the fuel rod bundle. This further reduced the flow resistance of the sleeve because the coolant, on its way upwards along the sleeve, substantially encounters only sheet edges which are oriented obliquely relative to the main flow direction.

To facilitate the insertion of the bundle with the sleeve or sleeves fitted thereon, each respective sleeve is provided at its lower part with a guiding edge by bending the lower edge of the sleeve somewhat inwards towards the centre of the bundle.

Since the sleeve is not subjected to any major mechanical stresses, it may advantageously be made of Zircaloy, which has a low neutron absorption.

By way of example, the invention will now be described in greater detail with reference to the accompanying drawings showing in
- Figure 1: part of a vertical cross section of a conventional fuel assembly to demonstrate the above-explained phenomenon dealt with by the invention,
- Figure 2: a fuel assembly for four separate bundles of fuel rods in vertical cross section,
- Figure 3: a horizontal cross section through the assembly shown in Figure 2,
- Figure 4: a sleeve sheet used by the invention folded out and punched into a net-like structure,
- Figure 5 and 6: the same sheet as in Figure 4 folded into a sleeve with a cross section according to Figure 6.

Figure 2 shows a fuel assembly 7 in the form of an elongated channel having several corners and a wall 6. Spacers 8 and 9 of a known type are arranged in the fuel assembly. Each spacer retains a sub-bundle of fuel rods 1. Between the spacers 8 and 9, a sleeve 10 according to the invention has been inserted around the sub-bundle. The sleeve 10 may be given such dimensions that it fits into the shown sub-channels in the fuel assembly 7. The same arrangement may, of course, be used where the fuel assembly 7 only comprises, for example, one single bundle and thus is not divided into four sections as the fuel assembly shown in Figures 2 and 3. The sleeve 10 has such dimensions that, in the inserted position of the bundle, it closely conforms to the wall 6 of the fuel assembly 7 and, in the case of a fuel assembly 7 divided into sections by means of inner walls 11, also to these inner walls 11. Otherwise, the sleeve 10 surrounds the bundle of fuel rods rather loosely and is supported at the bottom against - in the shown case - the spacer 8. The lower edge of the sleeve 10 is bent somewhat inwards (Figure 5) to provide guidance into the fuel assembly 7.

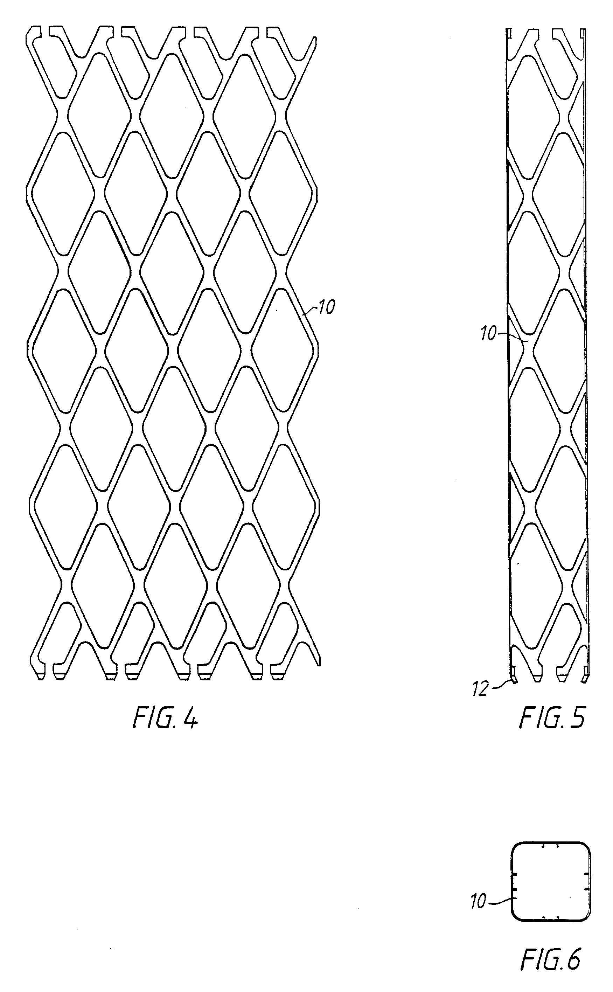

Figure 4 shows the sleeve 10 folded out and punched into a net-like structure. The sheet used is suitably of Zircaloy and has a thickness of 0.8 mm. The quadrilaterals of the net are of rhombic shape with the longer diagonal arranged such that it will coincide with the longitudinal axis of the fuel rod bundle.

Figure 5 shows the sheet folded and welded into a sleeve 10 with a cross section according to Figure 6. At the bottom the sleeve 10 is provided with guide studs 12 slightly bent towards the centre of the sleeve 10.

When cooling water passes upwards through the fuel channel (or sub-channels) formed by the fuel assembly 7 and, in the upper part of the channel, is reduced to a water film on the wall 6 of the channel as well as on the fuel rods 1 (Figure 1), the intention according to the invention is that the cooling water flowing along the channel wall 6 should contact the sleeve 10. The sleeve 10 forms an elevation along the wall 6 and scrapes off the cooling water from the wall 6 and diverts it towards the fuel rods located inside, thereby improving the cooling of these fuel rods. Since the sleeve has been given a structure with large openings, the pressure drop is prevented from becoming unnecessarily great. A particularly suitable net-like shape in this respect is shown, as mentioned, in Figures 4-6. Because the quadrilaterals in the net are rhomb-shaped with the longer diagonal in the longitudinal direction of the bundle, the upwardly-flowing cooling water substantially only encounters elevations, obliquely directed relative to the main flow direction of the water. This results in a further reduced pressure drop. Other net-like configurations are, of course, possible; the main thing is, however, that the cooling water to the greatest possible extent contacts oblique elevations.

Where necessary, several sleeves may be inserted; however, suitably only one sleeve between each pair of adjacent spacers.

## Claims

1. Fuel assembly for a boiling nuclear reactor in the form of an elongated channel or several sub-channels each channel having several corners, with a bundle of similarly elongated fuel rods (1) arranged in each channel and retained by a plurality of spacers (8,9) located along the bundle, **characterized** in that in the upper part of the fuel assembly, at least between one pair of spacers, a sleeve (10) formed of a sheet is arranged around the bundle, the external shape of the sleeve being such that it conforms closely to the walls of the channel surrounding said fuel rod bundle, and that said sheet is perforated by a large number of openings to reduce the pressure drop generated by the sheet in the coolant flow and to reduce the amount of material present in the fuel assembly.

2. Fuel assembly according to claim 1, **characterized** in that the ratio of the sheet area covered by said openings and the sheet area covered by the remaining sheet material is at least 1:1.

3. Fuel assembly according to claim 1 or 2, **characterized** in that said openings are shaped and arranged such that the remaining sheet material consists to the greatest possible extent of elevations obliquely oriented relative to the longitudinal axis of the fuel bundle.

4. Fuel assembly according to any of the preceding claims, **characterized** in that the sleeve sheet (10) is punched into a net-like structure.

5. Fuel assembly according to claim 4, **characterized** in that the meshes of the net-like structure are of rhombic shape with their longer diagonal being arranged in the longitudinal (vertical) direction of the fuel rod bundle.

6. Fuel assembly according to any of the preceding claims, **characterized** in that at least the lower edge of the sleeve (10) is bent somewhat inwards towards the centre of the bundle.

7. Fuel assembly according to any of the preceding claims, **characterized** in that the sleeve (10) is made of Zircaloy.

## Patentansprüche

1. Brennelement für einen Siedewasserreaktor in Gestalt eines langgestreckten Kastens oder mehrerer Teilkästen, wobei jeder Kasten mehrere Ecken hat, mit einem Bündel entsprechend langgestreckter Brennstäbe (1), die in jedem Kasten angeordnet sind und von einer Vielzahl längs des Bündels angeordneter Abstandshaltern (8,9) in ihrer Lage gehalten werden, **dadurch gekennzeichnet**, daß im oberen Teil des Brennelements, zumindest zwischen einem Paar von Abstandshaltern, eine aus einem Blech geformte Hülse um das Bündel herum angeordnet ist, wobei die äußere Gestalt der Hülse so beschaffen ist, daß sie sich dicht den Wänden des das genannte Brennstabbündel umgebenden Kastens anpaßt, und daß das genannte Blech mit einer großen Anzahl von Öffnungen perforiert ist zur Reduzierung des von dem Blech im Kühlmittelstrom verursachten Druckverlustes und zur Reduzierung der im Brennelement vorhandenen Materialmenge.

2. Brennelement nach Anspruch 1, **dadurch gekennzeichnet**, daß das Verhältnis der Blechfläche, die von den genannten Öffnungen eingenommen wird, zu der Blechfläche, die von dem übrigen Blechmaterial abgedeckt wird, mindestens 1:1 beträgt.

3. Brennelement nach Anspruch 1 oder 2, **dadurch gekennzeichnet**, daß die genannten Öffnungen derart geformt und angeordnet sind, daß das verbleibende Blechmaterial in größtmöglichem Ausmaß aus Erhöhungen besteht, die zur Hauptachse des Brennstabbündels schräg verlaufen.

4. Brennelement nach einem der vorhergehenden Ansprüche, **dadurch gekennzeichnet**, daß dem Hülsenblech (10) durch Ausstanzungen eine netz-ähnliche Struktur verliehen ist.

5. Brennelement nach Anspruch 4, **dadurch gekennzeichnet**, daß die Maschen der netz-ähnlichen Struktur rhombische Gestalt haben, wobei die längere Diagonale sich in Längsrichtung (vertikal) des Brennstabbündels erstreckt.

6. Brennstabbündel nach einem der vorhergehenden Ansprüche, **dadurch gekennzeichnet**, daß zumindest die untere Kante der Hülse (10) nach innen zum Zentrum des Bündels etwas abgebogen ist.

7. Brennelement nach einem der vorhergehenden Ansprüche, **dadurch gekennzeichnet**, daß die Hülse (10) aus Zirkaloy besteht.

## Revendications

1. Assemblage combustible pour un réacteur nucléaire à eau bouillante sous la forme d'un canal oblong ou de plusieurs sous-canaux, chaque canal ayant plusieurs sommets, avec un faisceau de crayons combustibles (1) oblongs analogues dans chaque canal et retenu par plusieurs entretoises (8,9) placées le long du faisceau, caractérisé en ce que, dans la partie supérieure de l'assemblage combustible, au moins entre un couple d'entretoises, un manchon (10) formé d'une feuille est prévu autour du faisceau, la forme extérieure du manchon étant telle qu'il se conforme étroitement aux parois du canal entourant le faisceau de crayons combustibles et la feuille est perforée d'un grand nombre d'ouvertures pour réduire la perte de charge engendrée par la feuille dans le courant d'agent de refroidissement et pour réduire la quantité de matière présente dans l'assemblage combustible.

2. Assemblage combustible suivant la revendication 1, caractérisé en ce que le rapport de la surface de la feuille couverte par les ouvertures à la surface couverte par la matière restante de la feuille est d'au moins 1:1.

3. Assemblage combustible suivant la revendication 1 ou 2, caractérisé en ce que ces ouvertures sont conformées et disposées de manière que la matière restante de la feuille consiste autant que possible en surélévations orientées obliquement par rapport à l'axe longitudinal du faisceau de crayons combustibles.

4. Assemblage combustible suivant l'une des quelconques revendications précédentes, caractérisé en ce que la feuille (10) servant de manchon est perforée en une structure analogue à un filet.

5. Assemblage combustible suivant la revendication 4, caractérisé en ce que les mailles de la structure en forme de filet sont en forme de losange dont la diagonale la plus grande est dans la direction longitudinale (verticale) du faisceau de crayons combustibles.

6. Assemblage combustible suivant l'une des quelconques revendications précédentes, caractérisé en ce qu'au moins le bord inférieur du manchon (10) est courbé quelque peu vers l'intérieur en direction du centre du faisceau.

7. Assemblage combustible suivant l'une des quelconques revendications précédentes, caractérisé en ce que le manchon (10) est en Zircaloy.
